# EUROPÄISCHE PATENTSCHRIFT

(11) **EP 3 502 188 B1**
(45) Veröffentlichungstag und Bekanntmachung des Hinweises auf die Patenterteilung: **19.08.2020**
(21) Anmeldenummer: 17210036.4
(22) Anmeldetag: 22.12.2017
(51) Int. Cl.: C08L 77/06, C08G 69/36, C08L 77/02, C08G 69/26, C08K 3/40

(54) **VERWENDUNG EINER POLYAMID-FORMMASSE MIT NIEDRIGEM EXTRAKTWERT ZUR HERSTELLUNG VON FORMTEILEN IM TRINKWASSERBEREICH SOWIE ENTSPRECHENDE FORMTEILE**
USE OF A POLYAMIDE MOULDING MATERIAL WITH LOW EXTRACT VALUE FOR MANUFACTURING MOULDED PARTS IN THE DRINKING WATER SECTOR AND RESULTANT MOULDED ARTICLES
UTILISATION D'UNE SUBSTANCE DE MOULAGE EN POLYAMIDE À FAIBLE VALEUR D'EXTRAIT DESTINÉE À LA FABRICATION DE PIÈCES MOULÉES FORMAGE DANS LES CIRCUITS D'EAU POTABLE AINSI QUE PIÈCE MOULÉE CORRESPONDANTE

(43) Veröffentlichungstag der Anmeldung: 26.06.2019
(73) Patentinhaber: EMS-Patent AG, 7013 Domat/Ems (CH)
(72) Erfinder: Stöppelmann, Georg, 7402 Bonaduz (CH)
(74) Vertreter: Pfenning, Meinig & Partner mbB

(56) Entgegenhaltungen:
- EP-A1- 2 113 535
- EP-B1- 2 055 742

## Beschreibung

### TECHNISCHES GEBIET

Die vorliegende Erfindung betrifft eine Polyamid-Formmasse insbesondere zur Verwendung im Trinkwasserbereich, das heisst zur Herstellung von Formteilen, bei welchen beim bestimmungsgemässem Gebrauch die verarbeitete Formmasse in Kontakt mit Trinkwasser tritt.

### STAND DER TECHNIK

Trinkwasser als unser wichtigstes Lebensmittel darf bis zur Entnahmestelle des Verbrauchers keine unzulässige Qualitätseinbussen erleiden. Dementsprechend kommt den Werkstoffen in der Trinkwasserinstallation (Bedarfsgegenstände) eine besondere Bedeutung zu. Nach DIN 1988 müssen alle Anlagenteile so beschaffen sein, dass das Trinkwasser in seiner Lebensmittelqualität nicht unzulässig beeinträchtigt wird.

Wenn die Ausgangsstoffe Gegenstand einer KTW-Empfehlung sind und die Fabrikationshilfs- und Zusatzstoffe in Art, Menge und Reinheit den dort aufgeführten Anforderungen entsprechen, ist die Einhaltung der Grund- und Zusatzanforderungen an dem Fertigprodukt (Formteil) nachzuweisen, wie z.B. der nachfolgend beschriebene Migrationstest.

Die Leitlinie zur hygienischen Beurteilung von organischen Materialien in Kontakt mit Trinkwasser (KTW-Leitlinie, Stand : 16.05.2007) beschreibt als Konkretisierung des Warmwassertests bei (60 ± 2) °C und des Heisswassertests bei (85 ± 2) °C (Durchführung des Migrationstests entsprechend DIN EN 12873-1: 2004 und -2: 2005) folgendes Verfahren, welches für die vorliegende Erfindung ein wesentliches Charakterisierungsmerkmal ist:
a) Es erfolgt keine Desinfektionsvorbehandlung (Hochchlorung) der Prüfkörper vor der Prüfung.
b) Die Vorbehandlung erfolgt in der Reihenfolge:
   - 1 h Spülen mit Leitungswasser,
   - 24 h Stagnation mit Versuchswasser bei der Prüftemperatur ((60 ± 2)°C oder (85± 2)°C),
   - 1 h Spülen mit Leitungswasser, - Abspülen mit Versuchswasser
c) Als Versuchswasser wird Wasser entsprechend 5.1.2 DIN EN 12873-1 verwendet.
d) Es werden mindestens zwei identische Kontaktversuche und zwei Blindversuche gleichzeitig durchgeführt.
e) Die Prüfung von Rohren mit einem Innendurchmesser < 80 mm erfolgt durch Befüllen. Rohre mit einem Innendurchmesser 80 DN < 300 mm werden durch Einstellen eines Glaszylinders bei einem O/V-Verhältnis (Oberflächen/Volumen-Verhältnis, wobei O die Oberfläche des Prüfkörpers und V das Volumen des Prüfwassers ist) von ca. 5 dm⁻¹ geprüft. Rohre mit einem Innendurchmesser 300 mm können durch Einstellen eines Glaszylinders oder durch Füllen von Rohrsegmenten bei einem O/V-Verhältnis von 5 dm⁻¹ geprüft werden. Behälterbeschichtungen werden als beschichtete Platten bei einem O/V-Verhältnis von ca. 5 dm⁻¹ geprüft. Ausrüstungsgegenstände und Dichtungen werden durch Eintauchen der Produkte bei einem O/V-Verhältnis von ca. 5 dm⁻¹ geprüft.
f) Wenn bei Rohren, Ausrüstungsgegenständen und Dichtungen kein Unterschied in der Materialzusammensetzung und im Produktionsprozess besteht, reicht die Prüfung am geringsten Durchmesser einer Produktreihe.
g) Das Befüllen bzw. Eintauchen der Probekörper erfolgt mit bzw. im Versuchswasser bei der Prüftemperatur. Die Prüfansätze sollen in einem Wärmeschrank oder Thermostaten auf dieser Temperatur gehalten werden.
h) Der Vorbehandlung folgen 7 Migrationsperioden bei der Prüftemperatur (vgl. Anlage 2 der Richtlinie: Schema zur Durchführung der Migrationsprüfungen bei erhöhten Temperaturen). Die Prüfwässer der ersten drei und der letzten zwei Prüfperioden mit je 24 Stunden Kontaktzeit werden für die weiteren Untersuchungen verwendet.
i) Der TOC (total organic carbon) wird als NPOC (Nonpurgeable organic carbon) nach DIN EN 1484:1997 in den 5 Migrationsproben bestimmt.
j) Die spezifische Migration von Einzelstoffen wird in den Migrationsproben der 1., 6. und 7. Periode bestimmt.

Eine wichtige Zusatzanforderung ist dabei sogenannte "Kohlenstoff-Abgabe" (Migrationsrate) im Kontakt mit dem Trinkwasser. Der Richtwert bei der 7. Extraktion von 12.5 mg C/m²d darf dabei nicht überschritten werden. Die der Migrationsrate zugrundeliegende Kohlenstoff-Konzentration, die hierbei bestimmt wird, entspricht der Gesamtkonzentration an gelöstem organischem Kohlenstoff (total organic carbon oder kurz TOC) nach dem siebenten Extraktionszyklus.

In der Regel steigt die extrahierbare Stoffmenge und damit der TOC-Wert mit zunehmender Temperatur, so dass bei gleichem polymerem Werkstoff unterschiedliche Extraktwerte bei 23°C (kalten Wasser), 60°C (warmes Wasser) und 85°C (heisses Wasser) erzielt werden. So haben einige Kunststoffe tiefe, KTWkonforme TOC-Werte bei Raumtemperatur, aber hohe TOC-Werte bei 60 oder 85°C, so dass sie nicht für den Warm- und Heisswasserbereich zugelassen werden.

Die US 2005/67514 A1 beschreibt ein Wellrohr, das u.a. auch aus Polyamid bestehen kann, und für die Trinkwasserversorgung verwendet werden soll. Die DE 199 45 106 A1 beschreibt einen Druckbehälter, der auch in Trinkwasseranlagen installiert werden kann. Der Behälter wird aus Polyamid im sogenannten Schleudergussverfahren gefertigt. Beispielhaft wird PA6 genannt.

EP 2 055 742 B1 betrifft eine Polyamid (PA1010, PA1012, PA1014, PA1210, PA 1212, PA 1214, PA 12 und PA 11) basierte Formmasse insbesondere zur Verwendung im Trinkwasserbereich, d.h. zur Herstellung von Formteilen, bei welchen beim bestimmungsgemässem Gebrauch die verarbeitete Formmasse in Kontakt mit Trinkwasser tritt.

EP 1 961787 A1 betrifft gefüllte Polyamidformmassen auf Basis eines Polyamidblends, z.B. aus PA614 und PA6I/6T, und Verstärkungsfasern, die gleichzeitig eine reduzierte Wasseraufnahme und gute mechanische Eigenschaften aufweisen, was sich in einer sehr guten Dimensionsstabilität und einer verringerten Schwankung der elektrischen Eigenschaften der daraus hergestellten Formmassen auswirkt.

Nach wie vor ungelöst bei den zuvor genannten Formteilen ist allerdings, dass die Berstbeständigkeit über den Lebenszyklus stark abnimmt. Ebenso ist das Problem der Kohlenstoff-Abgabe bei derartigen Formteilen nach wie vor nicht zufriedenstellend gelöst.

### AUFGABE DER ERFINDUNG

Der Erfindung liegt demnach die Aufgabe zugrunde, eine verbesserte Formmasse zur Herstellung eines Formkörper für Trinkwasser zur Verfügung zu stellen, insbesondere eine hinsichtlich dem Berstdruck verbesserte Formmasse, welche auch für Trinkwasser hoher Temperatur, insbesondere bei 80 oder 85 °C zugelassen werden kann. Gleichzeitig sollen die entsprechenden Formmassen eine verminderte Kohlenstoff-Abgabe aufweisen.

### DARSTELLUNG DER ERFINDUNG

Die zuvor genannte Aufgabe wird mit den Merkmalen des Patentanspruchs 1, betreffend die Verwendung von dort näher beschriebenen Polyamidformmassen zur Herstellung eines Formkörpers für Trinkwasser sowie mit den Merkmalen des Patentanspruchs 13, betreffend einen Formkörper gelöst. Die jeweiligen abhängigen Patentansprüche betreffen bevorzugte Ausführungsformen.

Die Lösung dieser Aufgabe wird somit dadurch erreicht, dass eine Polyamidformmasse enthaltend oder bestehend aus den folgenden Bestandteilen bereitgestellt wird:
(A) 37 - 90 Gew.-% einer Polyamidmischung bestehend aus den Komponenten (A1) und (A2), wobei
   (A1) 75 - 95 Gew.-% mindestens ein aliphatisches Polyamid enthaltend mindestens eine PA-Einheit V16 (V = acyclisches, aliphatisches Diamin mit 4 bis 12 Kohlenstoffatomen, 16 = 1,16-Hexadecandisäure); und
   (A2) 5 - 25 Gew.-% mindestens ein transparentes Polyamid VX/WX/VY/WY/Z, wobei mindestens eine der Polyamideinheiten WX oder WY vorhanden ist und wobei die Abkürzungen V bis Z folgende Bedeutung haben: V: acyclisches aliphatisches Diamin mit 4 bis 12 Kohlenstoffatomen; W: cycloaliphatisches Diamin; X: acyclische aliphatische Dicarbonsäuren mit 9 bis 18 Kohlenstoffatomen; Y: aromatische Dicarbonsäuren Z: Lactame und Aminocarbonsäuren mit 6 bis 12 Kohlenstoffatomen;
   wobei die Summe aus (A1) und (A2) die Gesamtheit der Polyamidmischung (A) ergibt;
(B) 10 - 60 Gew.-% Füll- oder Verstärkungsstoffe;
(C) 0 - 3 Gew.-% Hilfsstoffe und/oder Additive
wobei die Summe der Komponenten (A) bis (C) 100 Gew.-% ausmacht,
zur Herstellung eines Formkörpers für Trinkwasser, insbesondere eines Behälters, eines Fittings oder einer Leitung, bei welchem bei bestimmungsgemässer Verwendung wenigstens Bereiche der verarbeiteten Formmasse im Wesentlichen direkt dem Trinkwasser ausgesetzt sind.

Im Sinne der vorliegenden Erfindung wird unter "im Wesentlichen direkt dem Trinkwasser ausgesetzt" verstanden, dass der Formkörper bei bestimmungsgemäßem Gebrauch zumindest zeitweise oder permanent direkt mit Trinkwasser in Kontakt steht, z.B. dass die für den Kontakt mit Trinkwasser bestimmte Oberfläche des Formkörpers permanent mit Trinkwasser kontaktiert ist.

Ein erfindungswesentliches Element der Erfindung besteht somit u.a. darin, erkannt zu haben, dass die vorgeschlagene spezifische Polyamidformmasse unerwarteter Weise tatsächlich selbst bei hohen Temperaturen des Trinkwassers eine deutlich reduzierte Kohlenstoff-Abgabe (bestimmbar anhand des TOC-Werts) aufweist und bei den angegebenen Verstärkungsgraden (Anteil von der Komponente (B) überraschend gut verarbeitet werden kann. Gleichzeitig weisen die Formkörper einen überragenden Berstdruck auch nach längerer Lagerung in warmem oder heissem Wasser auf.

Die vorgeschlagene Polyamidformmasse zeichnet sich insbesondere dadurch aus, dass sie sich, wenn zu einem Formkörper verarbeitet, für die Lagerung oder Förderung von Trinkwasser bei erhöhter Temperatur, bevorzugt bei Temperaturen von wenigstens 60°C, insbesondere von mindestens 85°C eignet. Sie zeichnet sich insofern spezifisch dadurch aus, dass die gesamte Konzentration an gelöstem organischem Kohlenstoff bei der siebten Extraktion einen Wert von 12.5 mg C/m²d nicht überschreitet, die nach einem Verfahren bestimmt wird, wie es eingangs geschildert wurde.

Die nachfolgenden Ausführungen betreffen bevorzugte Ausführungsformen der erfindungsgemässen Formmasse und sind einzeln oder in Kombination auf die oben angegebene Formmasse anwendbar.

### Komponente A1

Bevorzugt handelt es sich bei der Komponente (A1) um mindestens ein aliphatisches Polyamid enthaltend mindestens 50 mol-%, bevorzugt mindestens 60 mol-% und insbesondere bevorzugt mindestens 80 mol-% einer PolyamidEinheit V16, wobei das acyclische, aliphatische Diamin V 6 bis 10 Kohlenstoffatome besitzt. Das bedeutet das aliphatische Polyamid der Kompoente (A1) kann weitere aliphatische Polyamid-Einheiten verschieden von V16 in Menngen bis zu 50 mol-%, bevorzugt bis zu 40 mol-% und besonders bevorzugt bis zu 20 mol-% enthalten. Bevorzugt handelt es sich hierbei um die Polyamid-Einheiten 610, 612, 614, 618, 1010, 1012, 1212, 1014, 1018, 912, 914 und 918, insbesondere um 612 und 614.

Besonders bevorzugt handelt es sich bei Komponente (A1) um ein aliphatisches Polyamid ausgewählt aus der Gruppe PA516, PA616, PA916, PA1016, PA616/1016, PA616/916, PA916/1016 und PA516/616 oder eine Mischung dieser Systeme, insbesondere um die Polyamide PA616, PA616/1016 oder PA1016.

Ebenso sind Mischungen oder Blends der zuvor genannten Polyamide oder Copoylamide hiervon, wie z.B. PA616/1016 oder PA516/1016 möglich. Ganz besonders bevorzugt ist PA616.

Die in Komponente (A1) enthaltene Polyamideinheit V16 wird bevorzugt gebildet durch Polykondensation der Diamine 1,4-Butandiamin, 1,5-Pentandiamin, 2-Methyl-1,5-pentandiamin, 1,6-Hexandiamin, 1,7-Heptandiamin, 1,8-Octandiamin, 2-Methyl-1,8-octandiamin, 1,9-Nonandiamin, 1,10-Dekandiamin, 1,11-Undecandiamin und/oder 1,12-Dodecandiamin mit der aliphatischen Dicarbonsäure 1,16-Hexadecandisäure. Besonders bevorzugt sind die Diamine 1,6-Hexandiamin, 1,9-Nonandiamin und 1,10-Dekandiamin.

Hinsichtlich der Materialeigenschaften und der Verarbeitbarkeit erweist es sich als Vorteil, wenn das aliphatische Polyamid der Komponente (A1), insbesondere wenn dieses als PA616 ausgewählt ist, eine Lösungsviskosität (bestimmt anhand einer 0.5 Gew.-%igen Lösung des Polymeren in m-Kresol bei 20 °C gemäss ISO 307:2013) im Bereich von ηᵣₑₗ = 1.5 bis 3.0, bevorzugt im Bereich von ηᵣₑₗ = 1.6 bis 2.6, insbesondere im Bereich von 1.7 bis 2.3, aufweist.

Der Gesamtanteil der Komponente (A1), bezogen auf die Komponente (A) beträgt bevorzugt von 78 - 93 Gew.-%, weiter bevorzugt von 80 - 90 Gew.-%.

### Komponente A2

Bei Komponente (A2) handelt es sich um mindestens ein transparentes, cycloaliphatisches Polyamid der Formel VX/WX/VY/WY/Z, wobei mindestens eine der Polyamideinheiten WX oder WY vorhanden sein muss (und somit die Einheiten VX, VY und Z optional sind) und wobei die Einheiten V, W, X, Y, und Z von den folgenden Molekülen abgeleitet sind, die im Polyamid gemäß Komponenten (A2) amidisch gebunden vorliegen:
(V): Acyclisches aliphatisches Diamin mit 4 bis 12 Kohlenstoffatomen;
(W): Cycloaliphatisches Diamin;
(X): Acyclische aliphatische Dicarbonsäure mit 9 bis 18 Kohlenstoffatomen;
(Y): Aromatische Dicarbonsäuren;
(Z): Lactame, Aminocarbonsäuren.

Die erfindungsgemässen Polyamide der Komponente (A2) beruhen demnach auf cycloaliphatischen Diaminen sowie acyclisch aliphatischen und/oder aromatischen Dicarbonsäuren, liegen amorph oder mikrokristallin vor und weisen eine hohe Transparenz auf. Unter hoher Transparenz bei der Bezeichnung der Komponente (A2) ist generell zu verstehen, dass die Lichttransmission einer aus der Komponente (A2) hergestellten Platte einer Dicke von 2 mm wenigstens 88%, bevorzugt wenigstens 90%, beträgt, wenn die Transmission mittels UV/VIS-Spektrometer bei einer Wellenlänge von 600 nm bestimmt wird.

Gemäß einer bevorzugten Ausführungsform ist das Diamin (V) ausgewählt aus der Gruppe bestehend aus 1,4-Butandiamin, 1,5-Pentandiamin, 2-Methyl-1,5-pentandiamin, Hexandiamin, insbesondere 1,6-Hexandiamin, 2,2,4-Trimethyl-1,6-hexamethylendiamin, 2,4,4-Trimethyl-1,6-hexamethylendiamin, Nonandiamin, insbesondere 1,9-Nonandiamin, 2-Methyl-1,8-octandiamin, 1,10-Decandiamin, 1,11-Undecandiamin, 1,12-Dodecandiamin und Mischungen daraus. Besondere bevorzugt sind die offenkettigen, aliphatischen Diamine (V) ausgewählt aus der Gruppe bestehend aus Diaminen mit 6 bis 10 Kohlenstoffatomen, insbesondere 1,6-Hexandiamin, 1,9-Nonandiamin, 1,10-Decandiamin und Mischungen hiervon.

Eine weitere bevorzugte Ausführungsform der vorliegenden Erfindung sieht vor, dass das cycloaliphatische Diamin (W) ausgewählt ist aus der Gruppe bestehend aus Bis-(4-amino-3-methyl-cyclohexyl)-methan (MACM), Bis-(4-amino-cyclohexyl)-methan (PACM), Bis-(4-amino-3-ethyl-cyclohexyl)-methan, Bis-(4-amino-3,5-dimethyl-cyclohexyl)-methan (TMDC), 2,6-Norbornandiamin (2,6-Bis-(aminomethyl)-norbornan), 1,3-Diaminocyclohexan (BAC), 1,4-Diaminocyclohexandiamin, Isophorondiamin, 1,3-Bis-(aminomethyl)cyclohexan, 1,4-Bis-(aminomethyl)cyclohexan, 2,2-(4,4'-Diaminodicyclohexyl)propan und Mischungen daraus. Besonders bevorzugt sind die cycloaliphatischen Diamine (W) ausgewählt aus der Gruppe bestehend aus Bis-(4-amino-3-methyl-cyclohexyl)-methan (MACM) und Bis(4-amino-cyclohexyl)methan (PACM) und Mischungen hiervon.

Eine weitere bevorzugte Ausführungsform der vorliegenden Erfindung sieht vor, dass die aliphatische Dicarbonsäure (X) ausgewählt ist aus der Gruppe bestehend aus 1,9-Nonandisäure, 1,10-Decandisäure, 1,11-Undecandisäure, 1,12-Dodecandisäure, 1,13-Tridecandisäure, 1,14-Tetradecandisäure, 1,15-Pentadecandisäure, 1,16-Hexadecandisäure, 1,17-Heptadecandisäure, 1,18-Octadecandisäure, und Mischungen daraus. Besonders bevorzugt sind die offenkettigen, aliphatischen Dicarbonsäuren (X) ausgewählt aus der Gruppe bestehend aus Dicarbonsäuren mit 10 bis 16 Kohlenstoffatomen, insbesondere 1,10-Decandisäure, 1,12-Dodecandisäure, 1,14-Tetradecandisäure, 1,16-Hexadecandisäure und Mischungen hiervon.

Nach einer weiteren bevorzugten Ausführungsform der vorliegenden Erfindung ist die aromatische Dicarbonsäure (Y) ausgewählt aus der Gruppe bestehend aus Terephthalsäure, Isophthalsäure, Naphthalindicarbonsäuren (NDA), insbesondere 1,5-Naphthalindicarbonsäure und 2,6-Naphthalindicarbonsäure, Biphenyldicarbonsäuren, insbesondere Biphenyl-2,2'-dicarbonsäure, 4,4'-Diphenyldicarbonsäure, 3,3'-Diphenyldicarbonsäure, 4,4'-Diphenyletherdicarbonsäure, 4,4'-Diphenylmethandicarbonsäure und 4,4'-Diphenylsulfondicarbonsäure, 1,5-Anthracendicarbonsäure, p-Terphenylen-4,4"-dicarbonsäure und 2,5-Pyridindicarbonsäure und Mischungen davon. Besonders bevorzugt sind die aromatischen Dicarbonsäuren (Y) ausgewählt sind aus der Gruppe bestehend aus Terephthalsäure, Isophthalsäure und Mischungen hiervon.

Nach einer weiteren bevorzugten Ausführungsform der vorliegenden Erfindung ist das Lactam und/oder die α,ω-Aminocarbonsäure (Z) ausgewählt aus der Gruppe bestehend aus Caprolactam (CL), α,ω-Aminocapronsäure, α,ω-Aminoheptansäure, α,ω-Aminoctansäure, α,ω-Aminononansäure, α,ω-Aminodecansäure, α,ω-Aminoundecansäure (AUA), Laurinlactam (LL) und α,ω-Aminododecansäure (ADA), besonderes bevorzugt sind Laurinlactam, α,ω-Aminoundecansäure und α,ω-Aminododecansäure und Mischungen daraus.

Innerhalb der Komponente (A2) werden die Monomerbausteine bevorzugt derart ausgewählt, dass die Abkürzungen V bis Z in der Formel VX/WX/VY/WY/Z von den folgenden Molekülen abgeleitet sind, die im Polyamid gemäß Komponenten (A2) amidisch gebunden vorliegen:
V: acyclisches aliphatisches Diamin mit 6 bis 10 Kohlenstoffatomen, bevorzugt, insbesondere 6 oder 10 Kohlenstoffatomen;
W: cycloaliphatisches Diamin ausgewählt aus der Gruppe bestehend aus MACM, PACM. TMDC, BAC.
X: acyclische aliphatische Dicarbonsäure mit 10 bis 16 Kohlenstoffatomen, insbesondere 12 bis 16
Y: Terephthalsäure, 1,5-Naphthalindicarbonsäure und 2,6-Naphthalindicarbonsäure und Isophthalsäure
Z: Laurinlactam, α,ω-Aminoundecansäure und α,ω-Aminododecansäure, insbesondere Laurinlactam.

Bei Komponente (A2) gemäss der Formel VX/WX/VY/WY/Z ist besonders bevorzugt, dass (V) ausgewählt ist aus der Gruppe 1,6-Hexandiamin, 1,9-Nonandiamin, 1,10-Decandiamin, (W) aus der Gruppe Bis-(4-amino-3-methylcyclohexyl)-methan (MACM) und Bis(4-amino-cyclohexyl)methan (PACM), (X) aus der Gruppe 1,10-Decandisäure, 1,12-Dodecandisäure, 1,14-Tetradecandisäure, 1,16-Hexadecandisäure, (Y) aus der Gruppe Terephthalsäure, Isophthalsäure und (Z) aus der Gruppe Laurinlactam, α,ω-Aminoundecansäure und α,ω-Aminododecansäure.

Dabei steht MACM für die ISO-Bezeichnung Bis-(4-amino-3-methyl-cyclohexyl)-methan, welches unter dem Handelsnamen 3,3'-Dimethyl-4-4'-diaminodicyclohexylmethan als Laromin C260-Typ (CAS Nr. 6864-37-5) kommerziell erhältlich ist. Die Ziffer nach dem Begriff MACM steht jeweils für eine aliphatische Dicarbonsäure (C12 z.B. DDS, Dodecandisäure), mit welcher das Diamin MACM polykondensiert ist. PACM steht für die ISO-Bezeichnung Bis-(4-aminocyclohexyl)-methan, welches unter dem Handelsnamen 4,4'-Bisaminodicyclohexylmethan als Dicykan-Typ (CAS NI. 1761-71-3) kommerziell erhältlich ist.

Bevorzugt handelt es sich bei der Komponente (A2) um MACM12, PACM12, MACM14, PACM14, MACM16, PACM16, MACM18, PACM18, MACMI/12, MACMI/MACMT/MACM12, MACMI/MACMT/MACM16 oder MACMI/MACMT/12 oder um eine Mischung zweier oder mehrerer dieser Systeme.

Bei den lactamhaltigen Polyamiden (A2) der Zusammensetzung MACMI/12 und MACMI/MACMT/12, liegt der Gehalt an Laurinlactam vorzugsweise im Bereich von 10 bis 45 mol-%, bevorzugt von 15 bis 40 mol-%, insbesondere kleiner 20 bis 35 mol-%.

Besonders bevorzugte transparente Polyamide sind: MACM12, MACM16, MACMI/12, MACMI/MACMT/MACM12, MACMI/MACMT/MACM16 und MACMI/MACMT/12.

Hinsichtlich der Verarbeitbarkeit erweist es sich als Vorteil, wenn das cycloaliphatische Polyamid der Komponente (A2) eine Lösungsviskosität (bestimmt anhand einer 0.5 Gew.-%igen Lösung des Polymeren in m-Kresol bei 20 °C gemäss ISO 307) im Bereich von ηᵣₑₗ = 1.4 bis 2.5, bevorzugt im Bereich von ηᵣₑₗ = 1.5 bis 2.0, insbesondere im Bereich von 1.55 bis 1.90, aufweist.

Weiterhin ist es von Vorteil, wenn das transparente Polyamid (A2) ein amorphes Polyamid mit einer Schmelzenthalpie von weniger als 4 J/g, oder ein mikrokristallines Polyamid mit einer Schmelzenthalpie im Bereich von 4 bis 25 J/g ist.

Bevorzugt beträgt der Gehalt der Komponente (A2), bezogen auf die Gesamtheit der Polyamidmischung (A) von 22 - 7 Gew.-%, weiter bevorzugt von 20 - 10 Gew.-%.

### Komponente A

Die Polyamide der Komponente (A1) - insbesondere PA616 als Beispiel für die Komponente (A1) - allein erfüllen die Zusatzanforderung hinsichtlich des TOC-Wertes für kaltes und warmes, scheitern aber knapp am TOC-Grenzwert für Wasser von 85°C. Erst durch den Zusatz von kleinen Mengen an amorphen oder mikrokristallinen (transparenten) Polyamiden der Komponente (A2) vorzugsweise im Konzentrationsbereich von 7 - 22, insbesondere von 10 - 20 Gew.-%, jeweils bezogen auf die Komponente (A), kann überraschenderweise der TOC so weit abgesenkt werden, dass der geforderte Richtwert erreicht oder unterschritten wird. Die verwendeten amorphen oder mikrokristallinen (gemeinsam ist diesen die Transparenz) Polyamide der Komponente (A2) selbst haben einen tiefen TOC-Wert. Die erzielte TOC ist aber keineswegs ein Mittelwert zwischen den TOC-Werten der Mischungskomponenten, sondern die Reduktion überschreitet im gewählten Konzentrationsbereich signifikant die sich theoretisch aus dem Mischungsverhältnis der Komponenten ergebenden Werte. Damit ergibt sich überraschend, dass Mischungen aus den Polyamiden der Komponente (A1), insbesondere PA616, und transparenten Polyamiden der Komponente (A2) insbesondere im Zusammensetzungsbereich von 80 - 90% (A1) / 10 - 20% (A2), jeweils bezogen auf die Mischung (A), die Anforderungen für den Kontakt auch mit heissem Trinkwasser erfüllen. Bevorzugt liegt der Gehalt der Komponente (A), bezogen auf die Summe der Komponente (A) bis (C) bzw. der gesamten Formmasse im Bereich von 44-85 Gew.-%, weiter bevorzugt im Bereich von 49.5-75 Gew.-% oder 49.5 bis 74.9 Gew.-%.

### Komponente B

Die Komponente (B) kann sowohl faserförmige Verstärkungsmittel als auch weitere partikuläre Füllstoffe enthalten. Insbesondere wird bevorzugt, wenn (B) ausschliesslich aus faserförmigen Verstärkungsmitteln, ausgewählt aus der Gruppe: Glasfasern, Kohlenstofffasern, Borfasern, Aramidfasern, Basaltfasern respektive Mischungen davon, besteht.

Gemäss einer bevorzugten Ausführungsform der erfindungsgemässen Polyamidformmasse wird die Komponente (B) vollständig aus Glasfasern gebildet.

Die verwendeten Glasfasern besitzen eine Querschnittsfläche, die entweder kreisförmig (oder synonym rund) oder nicht-kreisförmig (oder synonym flach) ist, wobei im letzteren Fall das Abmessungsverhältnis von der Haupt-Querschnittsachse zur Neben-Querschnittsachse mindestens 2, z.B. von 2.5 bis 4.5 beträgt.

Die Verstärkung mit Glasfasern kann mit Kurzfasern (z.B. Schnittglas mit einer Länge von 2 - 50 mm) oder Endlosfasern (Langglas oder Rovings) erfolgen.

In einer bevorzugten Ausführungsform sind die erfindungsgemäss eingesetzten Glasfasern Kurzglasfasern mit einem Durchmesser im Bereich von 6 bis 20, bevorzugt 9 bis 12 µm. Die Glasfasern liegen in Form von Schnittglas mit einer Länge von 2 bis 50 mm vor. Insbesondere werden erfindungsgemäss E- und/oder S-Glasfasern verwendet. Es können aber auch alle anderen Glasfasersorten, wie z. B. A-, C-, D-, M-, R-Glasfasern oder beliebige Mischungen davon oder Mischungen mit E- und/oder S-Glasfasern eingesetzt werden. Es werden die für Polyamid üblichen Schlichten, wie z. B. diverse Aminosilanschlichten, verwendet, wobei hochtemperaturstabile Schlichten bevorzugt werden.

In einer weiteren bevorzugten Ausführungsform sind die eingesetzten Glasfasern Langglasfasern (Roving, Endlosglasfasern). Die erfindungsgemäss als Roving eingesetzten Glasfasern weisen einen Durchmesser von 10 bis 20 µm, bevorzugt von 12 bis 17 µm auf. Insbesondere werden erfindungsgemäss E-Glasfasern verwendet. Neben den bevorzugten E-Glasfasern, werden insbesondere S-Glasfasern eingesetzt, da sie gegenüber den E-Glasfasern eine um 30% höhere Zugfestigkeit besitzen. Es können aber auch alle anderen Glasfasersorten, wie z.B. A-, C-, D-, M, R-Glasfasern oder beliebige Mischungen davon oder Mischungen mit E- und/oder S-Glasfasern eingesetzt werden.

Bei den flachen Glasfasern, also Glasfasern mit nicht-kreisförmiger Querschnittsfläche, werden solche mit einem Abmessungsverhältnis von der Hauptquerschnittsachse zur senkrecht darauf stehender Nebenquerschnittsachse von mehr als 2, bevorzugt von 2.5 bis 4.5, insbesondere von 3 bis 4 bevorzugt eingesetzt. Diese sogenannten flachen Glasfasern weisen eine ovale, elliptische, mit Einschnürung(en) versehene elliptische (sogenannte Kokon- oder cocoon-Faser), polygonale, rechteckige oder nahezu rechteckige Querschnittsfläche auf. Ein weiteres kennzeichnendes Merkmal der eingesetzten flachen Glasfasern besteht darin, dass die Länge der Hauptquerschnittsachse bevorzugt im Bereich von 6 bis 40 µm, insbesondere im Bereich von 15 bis 30 µm und die Länge der Nebenquerschnittsachse im Bereich von 3 bis 20 µm, insbesondere im Bereich von 4 bis 10 µm liegt. Dabei weisen die flachen Glasfasern eine möglichst hohe Packungsdichte auf, d.h. die Glasquerschnittsfläche füllt ein gedachtes, den Glasfaserquerschnitt möglichst exakt umgebenden Rechtecks zu mindestens 70%, bevorzugt mindestens 80% und insbesondere bevorzugt zu mindestens 85% aus.

Zur Verstärkung der erfindungsgemässen Formmassen können auch Mischungen von Glasfasern mit kreisförmigem und nicht-kreisförmigem Querschnitt verwendet werden, wobei der Anteil an flachen Glasfasern bevorzugtermassen überwiegt, d.h. mehr als 50 Gew.-% der Gesamtmasse der Fasern ausmacht.

Die erfindungsgemässen Glasfasern können mit einer für Thermoplaste, insbesondere für Polyamid geeigneten Schlichte, enthaltend einen Haftvermittler auf Basis einer Amino- oder Epoxysilanverbindung, versehen sein.

Die flachen Glasfasern der Komponente (B1) sind dabei z.B. bevorzugt als E-Glasfasern gemäss ASTM D578-00 mit nicht-kreisförmigem Querschnitt ausgewählt, vorzugsweise aus 52-62% Siliciumdioxid, 12-16% Aluminiumoxid, 16-25% Calciumoxid, 0-10% Borax, 0-5% Magnesiumoxid, 0-2% Alkalioxide, 0-1.5% Titandioxid und 0-0.3% Eisenoxid. Die Glasfasern der Komponente (B1) weisen bevorzugt als flache E-Glasfasern eine Dichte von 2.54 - 2.62 g/cm³, einen Zug-E-Modul von 70 - 75 GPa, eine Zugfestigkeit von 3000 - 3500 MPa und eine Reissdehnung von 4.5 - 4.8% auf, wobei die mechanischen Eigenschaften an Einzelfasern mit einem Durchmesser von 10 µm und eine Länge von 12.7 mm bei 23°C und einer relativen Luftfeuchte von 50% bestimmt wurden.

Optional können weitere Füllstoffe (Komponente B) den Formmassen in Mengen von 0 bis 30 Gew.-% zugesetzt sein. Die Komponente (B) kann des weiteren Füllstoffe, gegebenenfalls in oberflächenbehandelter Form enthalten, ausgewählt aus der folgenden Gruppe: Talk, Glimmer, Silikat, Quarz, Titandioxid, Wollastonit, Kaolin, amorphe Kieselsäuren, Magnesiumcarbonat, Magnesiumhydroxid, Kreide, Kalk, Feldspat, Bariumsulfat, Voll- oder Hohl-Glaskugeln oder gemahlenes Glas, insbesondere gemahlene Glasfasern, dauerhaft magnetische bzw. magnetisierbare Metallverbindungen und/oder Legierungen, sowie Mischungen der Elemente aus dieser Gruppe. Besonders bevorzugt als Füllstoff werden Mikroglaskugeln mit einem mittleren Durchmesser im Bereich von 5 bis 100 µm, da diese dem Formteil tendenziell isotrope Eigenschaften verleihen und damit die Herstellung von Formteilen mit niedrigen Verzug erlauben.

Als Füllstoff können die erfindungsgemässen thermoplastischen Formmassen vorzugsweise also einen teilchenförmigen Füllstoff oder eine Mischung aus zwei oder mehr unterschiedlichen Füllstoffen auch in Kombination mit Verstärkungsstoffen enthalten.

Eine bevorzugte Ausführungsform der Polyamidformmasse nach der Erfindung zeichnet sich dadurch aus, dass die Komponente (B) im Bereich von 15-55 Gew.-%, bevorzugt im Bereich von 25 - 50 Gew.-%, weiter bevorzugt von 35 bis 60 Gew.-%, insbesondere bevorzugt in Form von Glasfasern mit nicht-kreisförmigem Querschnitt und einem Abmessungsverhältnis von der Haupt-Querschnittsachse zur Neben-Querschnittsachse im Bereich von 2.5 bis 4.5, vorliegt.

### Komponente C

Zusätzlich kann die Polyamidformmasse Hilfsstoffe und/oder Stabilisatoren enthalten; die Polyamidformmasse kann allerdings auch frei von derartigen Substanzen sein.

Da jede organische Stabilisierung eine mögliche C-Quelle hinsichtlich der TOC-Bestimmung gemäss KTW-Richtlinie darstellt, werden bevorzugt höhere Konzentrationen an Stabilisatoren vermieden. Daher wird bevorzugt eine maximale Konzentration der Stabilisierungsadditive (Komponente C) von 1.0 Gew.-%, weiter bevorzugt 0.5 Gew.-% bezogen auf die Polyamidformmasse eingehalten. Somit kann sichergestellt werden, dass keine weiteren unerwünschten C-Quellen in der Polyamidformmasse enthalten sind. Insbesondere bevorzugt ist ein Gehalt an Komponente (C) im Bereich von 0.1 bis 0.5 Gew.-%.

Bevorzugte Stabilisatoren sind Phenol- und/oder Phosphit-Verbindungen, wie z.B. Irganox 245, Irganox 1010, Irganox 1098, Hostanox PAR 24 oder Irgafos 168. Eine weiterhin bevorzugte Ausführungsform des Stabilisators besteht in der Kombination von organischen Hitzestabilisatoren, insbesondere in der Kombination von org. Stabilisatoren auf Basis eines Phenols, eines Phosphonits und eines HALS-Stabilisators, wie z.B. Hostanox O 3P, Sandosab P-EPQ und Hostavin N 30 P, wobei Hostanox O 3P ein Stabilisator auf Basis eines gehinderten Phenols mit der CAS-Nr. 32509-66-3, Sandosab P-EPQ ein Diphosphonit-Stabilisator (CAS: 119345-01-6) und Hostavin N 30 P ein Stabilisator auf Basis eines gehinderten Amins (HALS) mit der CAS-Nr. 202483-55-4, alle erhältlich von Clariant, ist. Besonders bevorzugt wird Irganox 1010 in einer Konzentration von gleich oder kleiner 0.5 Gew.-%.

Des weiteren betrifft die vorliegende Erfindung einen Formkörper zur Förderung und/oder Aufbewahrung von Trinkwasser, insbesondere bei erhöhten Temperaturen vorzugsweise im Bereich von oder oberhalb von 80°C, hergestellt aus einer Polyamidformmasse, wie sie oben charakterisiert worden ist. Bei einem solchen Formteilen kann es sich beispielsweise um eine Armatur, ein Fitting, ein Gehäuse, einen Mischer, einen Hahn, ein Filtergehäuse, einen Wasserzähler und Wasserzählerkomponenten (Lager, Propeller, Pilone), ein Ventil und Ventilkomponenten (Gehäuse, Absperrkugel, Schieber, Zylinder), eine Kartusche, eine Pumpe und Pumpenkomponenten (z.B. Schaufelräder, Impeller), eine Leitung oder einen Behälter respektive Bestandteil oder Element davon, handeln. Bei einem solchen Formkörper ist typischerweise wenigstens ein Bereich, vorzugsweise in Form einer Beschichtung oder eines Abschnitts, dem Trinkwasser bei bestimmungsgemässem Gebrauch im Wesentlichen direkt ausgesetzt ist.

Des weiteren betrifft die vorliegende Erfindung eine Verwendung einer Polyamidformmasse, wie sie oben beschrieben wurde, zur Herstellung eines Formkörpers, insbesondere eines Bauteils zur Förderung und/oder Aufbewahrung von Trinkwasser, insbesondere bei erhöhten Temperaturen vorzugsweise im Bereich von oder oberhalb von 80°C, insbesondere Armatur, Fitting, Gehäuse, Filtergehäuse, Hahn, Verteiler, Ventil, Ventilkomponente, Kartusche, Pumpe, Pumpenkomponente, Leitung oder Behälter respektive Bestandteil oder Element davon.

Sämtliche der genannten bevorzugten Ausführungsformen der Polyamidformmasse, die im Zusammenhang mit der erfindungsgemäßen Verwendung beschrieben wurden gelten selbstverständlich ebenso für die erfindungsgemäßen Formkörper.

### WEGE ZUR AUSFÜHRUNG DER ERFINDUNG

In den Beispielen gemäss Tabelle 1 wurden nachfolgend genannte Materialien verwendet:

| | |
|---|---|
| PA Typ A: | Polyamid 616 (ηᵣₑₗ = 1,96), Tm = 195°C, EMS-CHEMIE AG, Schweiz |
| PA Typ B: | Polyamid 12 (ηᵣₑₗ = 1,88), Tm = 178°C, EMS-CHEMIE AG, Schweiz |
| PA Typ C: | Polyamid MACMI/12 mit ηᵣₑₗ = 1,62, Tg = 160°C, EMS-CHEMIE AG, Schweiz |
| PA Typ D: | Polyamid MACMI/MACMT/12 mit ηᵣₑₗ = 1,65, Tg = 190°C, EMS-CHEMIE AG, Schweiz |
| PA Typ E: | Polyamid MACM16 mit ηᵣₑₗ = 1,75, EMS-CHEMIE AG, Tg = 140°C, Schweiz |
| PA Typ F: | Polyamid 6I/6T mit ηᵣₑₗ = 1,52, Tg = 125°C, EMS-CHEMIE AG, Schweiz |

Die Polyamide vom PA Typ C bis F sind amorphe Polyamide mit einer Schmelzenthalpie kleiner 4 J/g. PA Typ C, PA Typ D und PA Typ E sind cycloaliphatische Polyamide der Komponente (A2), während PA Typ F ein teilaromatisches Polyamid ist.

| | |
|---|---|
| Irganox 1010: | Pentaerythritoltetrakis-[3-(3,5-di-tert-butyl-4-hydroxyphenyl)-propionate, Antioxidans auf Basis eines sterisch gehinderten Phenols |
| Glasfasern Typ A: | CS 7928, 4.5 mm lang, 10 µm Durchmesser, BAYER AG, Deutschland |
| Glasfasern Typ B: | CSG3PA-820, 3 mm lang, 28 µm breit, 7 µm dick, Aspektverhältnis der Querschnittsachsen = 4, Aminosilanschlichte, NITTO BOSEKI, Japan (flache Glasfasern) |

Die Formmassen der Zusammensetzungen in Tabelle 1 wurden auf einem Zweiwellenextruder der Fa. Werner u. Pfleiderer Typ ZSK 30 hergestellt. Die Granulate des Typs B bis E werden in die Einzugszone dosiert. Die Glasfaser wird über einen Sidefeeder 3 Gehäuseeinheiten vor der Düse in die Polymerschmelze dosiert.

Die Gehäusetemperatur wurde als aufsteigendes Profil bis 280°C eingestellt. Bei 150 bis 200 upm wurden 10 kg Durchsatz erreicht. Die Granulierung erfolgte mittels einer Unterwassergranulierung bzw. Heissabschlags unter Wasser, bei der die Polymerschmelze durch eine Lochdüse gedrückt und direkt nach dem Austritt aus der Düse von einem rotierenden Messer in einem Wasserstrom granuliert wird. Nach Granulierung und Trocknung bei 100°C für 24h wurden die Granulateigenschaften gemessen und die Prüfkörper hergestellt.

Die Prüfkörper wurden auf einer Arburg Spritzgussmaschine hergestellt, wobei die Zylindertemperaturen von 230°C bis 270°C und eine Schneckenumfangsgeschwindigkeit von 15 m/min eingestellt wurden. Die Werkzeugtemperatur wurde mit -80 °C gewählt.

Die Messungen wurden nach folgenden Normen und an folgenden Prüfkörpern durchgeführt.

### Zug-E-Modul:

ISO 527 mit einer Zuggeschwindigkeit von 1 mm/min, ISO-Zugstab , Norm: ISO/CD 3167, Typ A1, 170 x 20/10 x 4 mm, Temperatur 23 °C

### Bruchfestigkeit und Bruchdehnung:

ISO 527 mit einer Zuggeschwindigkeit von 5 mm/min für verstärkte Formmassen und mit einer Zuggeschwindigkeit von 50 mm/min für unverstärkte Formmassen. ISO-Zugstab, Norm: ISO/CD 3167, Typ A1, 170 x 20/10 x 4 mm, Temperatur 23 °C

### Schlagzähigkeit nach Charpy:

ISO 179/*eU, ISO-Prüfstab, Norm: ISO/CD 3167, Typ B1, 80 x 10 x 4 mm, Temperatur 23 °C, * 1 = nicht instrumentiert, 2 = instrumentiert

### Kerbschlagzähigkeit nach Charpy:

ISO 179/*eA, ISO-Prüfstab, Norm: ISO/CD 3167, Typ B1, 80 x 10 x 4 mm, Temperatur 23 °C, * 1 = nicht instrumentiert, 2 = instrumentiert

### Glasumwandlungstemperatur (Tg), Schmelzpunkt (Tm) und Schmelzenthalpie (ΔHm):

ISO-Norm 11357 (2013), Granulat.

Die Differential Scanning Calorimetry (DSC) wurde mit Aufheizrate von 20 °C/min durchgeführt.

### Relative Viskosität:

DIN EN ISO 307, bestimmt anhand einer 0.5 Gew.-%igen Lösung des Polymeren in m-Kresol, Temperatur 20 °C

### Berstdruck:

Ein zylindrischer, einseitig verschlossener Spritzgusskörper (Innendurchmesser 27,2 mm; Wandstärke: 4 mm) wird mit Wasser gefüllt, mittels einer Hydraulikschnellkupplung in einem Berstdruckprüfstand montiert und mit 10 bar/s Druckanstieg einem Berstdruckversuch (Kurzzeit-Innendruckbelastung bis zum Versagen) unterzogen. In den Tabellen wird der maximal erreichte Druck angegeben. Die Probekörper, die einer Wasserlagerung unterzogen wurden, wurden unmittelbar nach Beendigung der Lagerung dem Berstdruckversuch unterworfen.

Wenn in der Tabelle nicht anders vermerkt, werden die Prüfkörper im trockenen Zustand verwendet. Dazu werden die Prüfkörper nach dem Spritzguss mindestens 48 h bei Raumtemperatur in trockener Umgebung (im Exsikkator über Silicagel) gelagert.

### Messung TOC-Wert 7. Migration:

Nach Leitlinie zur hygienischen Beurteilung von organischen Materialien in Kontakt mit Trinkwasser (KTW-Leitlinie, Stand : 16.05.2007) Heisswassertest bei (85 ± 2) °C (Durchführung des Migrationstests entsprechend DIN EN 12873-1: 2004 und -2: 2005); es wurden je zwei identische Kontakt- und Blindversuche parallel ausgeführt; die Differenz der Mittelwerte von Mess- und Blindwert ergibt die gesuchte Kohlenstoffkonzentration; als Prüfkörper wurden Platten mit einer Oberfläche von 87.5 cm² eingesetzt, die bei einem O/V-Verhältnis von 2.5 dm⁻¹ je mit 350 ml Prüfwasser pro Migrationstest extrahiert wurden; der TOC wurde nach der NPOC-Methode mit dem Gerät TOC-V CPH von Shimadzu bestimmt.

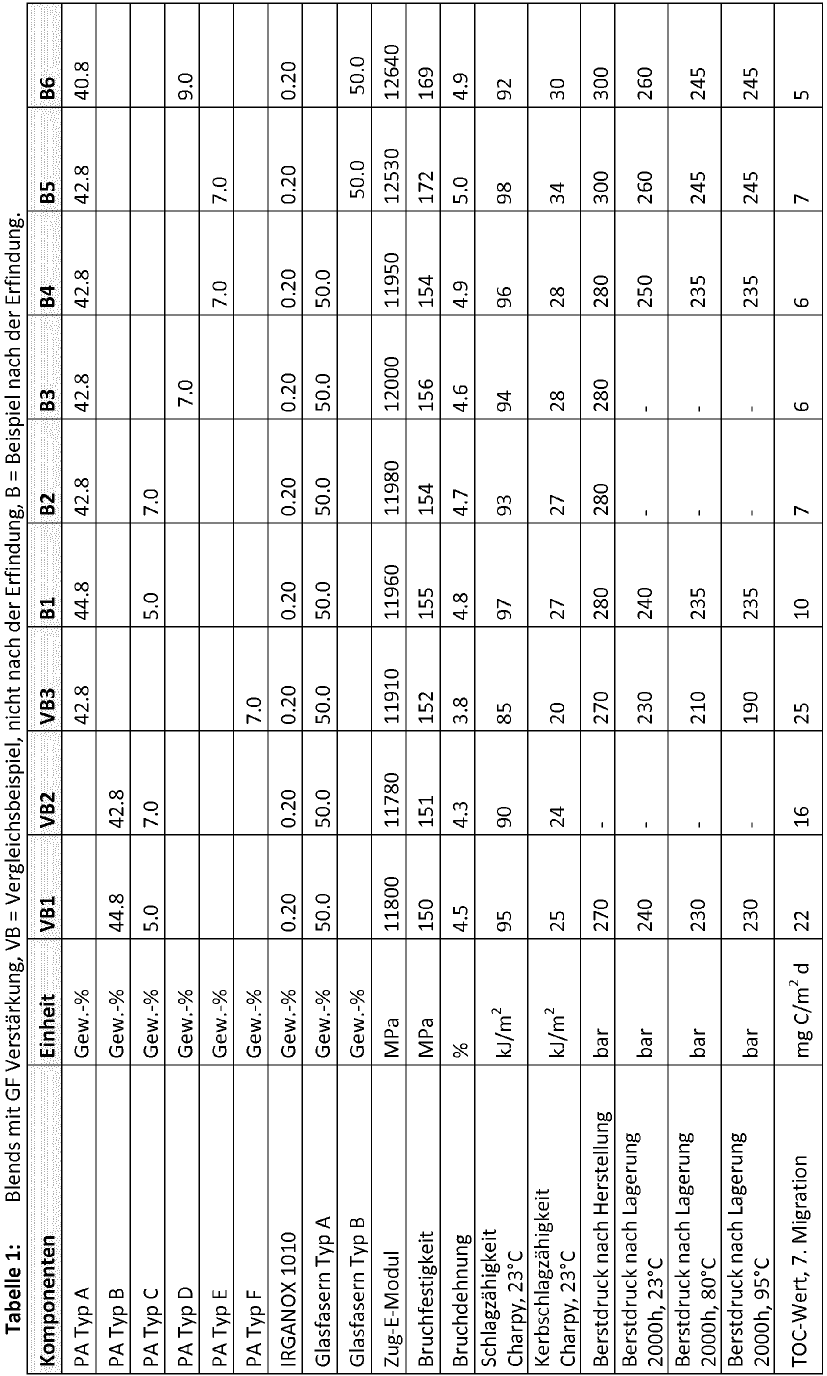

### Diskussion Ergebnisse

Wie aus Tabelle 1 ersichtlich ist, bewirkt die Kombination zweier selektierter Polyamide, nämlich PA616 (Komponente (A1)) und ausgewählten transparenten, cycloaliphatischen Polyamiden (Komponente (A2)) nicht nur, dass der gemessene TOC-Wert deutlich geringer ausfällt und somit die Kohlenstoff-Abgabe des untersuchten Prüfkörpers gesenkt werden konnte. In synergistischer Weise konnte zudem beobachtet werden, dass die erfindungsgemäßen Formkörper einen verbesserten Berstdruck aufweisen. Auch die sonstigen mechanischen Eigenschaften werden durch den Einsatz der genannten Polyamidformmasse nicht nachteilig beeinträchtigt, so konnte festgestellt werden, dass die Schlagzähigkeit und die Kerbschlagzähigkeit deutlich höher ausfallen, als bei den Vergleichsbeispielen.

## Patentansprüche

1. Verwendung einer Formmasse enthaltend oder bestehend aus den folgenden Bestandteilen:
(A) 37 - 90 Gew.-% einer Polyamidmischung bestehend aus den Komponenten (A1) und (A2), wobei
(A1) 75 - 95 Gew.-% mindestens ein aliphatisches Polyamid enthaltend mindestens eine PA-Einheit V16 (V = acyclisches, aliphatisches Diamin mit 4 bis 12 Kohlenstoffatomen, 16 = 1,16-Hexadecandisäure); und
(A2) 5 - 25 Gew.-% mindestens ein transparentes Polyamid VX/WX/VY/WY/Z, wobei mindestens eine der Polyamideinheiten WX oder WY vorhanden ist und wobei die Abkürzungen V bis Z von den folgenden Molekülen abgeleitet sind: V: acyclisches aliphatisches Diamin mit 4 bis 12 Kohlenstoffatomen; W: cycloaliphatisches Diamin; X: acyclische aliphatische Dicarbonsäuren mit 9 bis 18 Kohlenstoffatomen; Y: aromatische Dicarbonsäuren Z: Lactame und Aminocarbonsäuren mit 6 bis 12 Kohlenstoffatomen;
wobei die Summe aus (A1) und (A2) die Gesamtheit der Polyamidmischung (A) ergibt;
(B) 10 - 60 Gew.-% Füll- oder Verstärkungsstoffe;
(C) 0 - 3 Gew.-% Hilfsstoffe und/oder Additive;
wobei die Summe der Komponenten (A) bis (C) 100 Gew.-% ausmacht,
zur Herstellung eines Formkörpers für Trinkwasser, insbesondere eines Behälters, eines Fittings oder einer Leitung, bei welchem bei bestimmungsgemässer Verwendung wenigstens Bereiche der verarbeiteten Formmassezumindest zeitweise oder permanent direkt mit Trinkwasser in Kontakt steht.

2. Verwendung nach Anspruch 1, **dadurch gekennzeichnet, dass** es sich bei der Komponente (A1) um
mindestens ein aliphatisches Polyamid enthaltend mindestens 50, bevorzugt mindestens 60 mol-% und insbesondere bevorzugt mindestens 80 mol-% einer PA-Einheit V16, wobei das acyclische, aliphatische Diamin V 6 bis 10 Kohlenstoffatome besitzt, handelt; oder
ein aliphatisches Polyamid ausgewählt aus der Gruppe PA516, PA616, PA916, PA1016, PA616/1016 und PA516/616 oder eine Mischung dieser Systeme handelt; oder
PA616, PA616/1016 oder PA1016 handelt; oder
PA616 handelt.

3. Verwendung nach einem der vorhergehenden Ansprüche, **dadurch gekennzeichnet, dass** es sich bei der Komponente (A2) um MACM12, PACM12, MACM14, PACM14, MACM16, PACM16, MACM18, PACM18, MACMI/12, MACMI/MACMT/MACM12, MACMI/MACMT/MACM16 oder MACMI/MACMT/12 oder um eine Mischung zweier oder mehrerer dieser Systeme handelt.

4. Verwendung nach einem der vorhergehenden Ansprüche, **dadurch gekennzeichnet, dass**
die Verstärkungsstoffe der Komponente (B) ausgewählt sind aus der Gruppe: Glasfasern, Kohlenstofffasern, Aramidfasern oder Mischungen solcher Fasern, oder
die Füllstoffe der Komponente (B) ausgewählt sind aus der Gruppe: Talk, Glimmer, Silikat, Quarz, Titandioxid, Wollastonit, Kaolin, amorphe Kieselsäuren, Magnesiumcarbonat, Magnesiumhydroxid, Kreide, Kalk, Feldspat, Bariumsulfat, Voll- oder Hohl-Glaskugeln oder gemahlenes Glas.

5. Verwendung nach einem der vorhergehenden Ansprüche, **dadurch gekennzeichnet, dass** die Komponente (B) vollständig aus Glasfasern, insbesondere runden oder flachen Glasfasern mit einem Abmessungsverhältnis von der Haupt-Querschnittsachse zur Neben-Querschnittsachse im Bereich von 2.5 bis 4.5, insbesondere von 3 bis 4, gebildet wird.

6. Verwendung nach einem der vorhergehenden Ansprüche, **dadurch gekennzeichnet, dass**
das mindestens eine aliphatische Polyamid (A1) eine an einer 0.5 Gew.-%igen Lösung des Polymeren in m-Kresol bei 20°C nach DIN EN ISO 307 bestimmte Lösungsviskosität im Bereich von ηᵣₑₗ = 1.5 bis 3.0, bevorzugt im Bereich von ηᵣₑₗ = 1.6 bis 2.6, insbesondere im Bereich von 1.7 bis 2.3, aufweist, und/oder
das mindestens eine transparente Polyamid (A2) eine an einer 0.5 Gew.-%igen Lösung des Polymeren in m-Kresol bei 20°C nach DIN EN ISO 307 bestimmte Lösungsviskosität (ηᵣₑₗ) zwischen 1.4 und 2.5, bevorzugt zwischen 1.5 bis 2.0, insbesondere bevorzugt zwischen 1.55 und 1.90 und/oder einen Glasübergangspunkt T_{g} oberhalb von 100°C, bevorzugt oberhalb von 120°C, insbesondere bevorzugt oberhalb von 130°C aufweist.

7. Verwendung nach einem der vorhergehenden Ansprüche, **dadurch gekennzeichnet, dass**
das mindestens eine transparente Polyamid (A2) ein amorphes Polyamid mit einer nach ISO 11357 (2013) an Granulat bestimmten Schmelzenthalpie von weniger als 4 J/g ist, oder
das mindestens eine transparente Polyamid (A2) ein mikrokristallines Polyamid mit einer nach ISO 11357 (2013) an Granulat bestimmten Schmelzenthalpie im Bereich von 4 bis 25 J/g ist.

8. Verwendung nach einem der vorhergehenden Ansprüche, **dadurch gekennzeichnet, dass**, jeweils bezogen auf die Summe der Komponenten (A) bis (C),
die Komponente (A) im Bereich von 44 - 85 Gew.-%, bevorzugt im Bereich von 49.5 - 75 Gew.-% oder 49.5 - 74.9 Gew.-% vorliegt, und/oder die Komponente (B) im Bereich von 15 - 55 Gew.-%, bevorzugt von 25 - 50 Gew.-%, insbesondere bevorzugt in Form von Glasfasern, und/oder
die Komponente (C) im Bereich von höchstens 1.0 Gew.-%, bevorzugt höchstens 0.5 Gew.-%, insbesondere im Bereich von 0.1 bis 0.5 Gew.-% vorliegt.

9. Verwendung nach einem der vorhergehenden Ansprüche, **dadurch gekennzeichnet, dass** jeweils bezogen auf den Gesamtheit der Polyamidmischung (A)
die Komponente (A1) im Bereich von 78 - 93 Gew.-%, bevorzugt im Bereich von 80 - 90 Gew.-% vorliegt, und/oder
die Komponente (A2) im Bereich von 22 - 7 Gew.-%, bevorzugt im Bereich 20 - 10 Gew.-%, vorliegt.

10. Verwendung nach einem der vorhergehenden Ansprüche, **dadurch gekennzeichnet, dass** die Formasse aus folgenden Bestandteilen besteht:
(A) 44 - 85 Gew.-% einer Polyamidmischung bestehend aus den Komponenten (A1) und (A2), wobei
(A1) 78 - 93 Gew.-% aliphatisches Polyamid PA616 oder PA1016 oder eine Mischung davon ist; und
(A2) 7 - 22 Gew.-% transparentes, cycloaliphatisches Polyamid MACM12, PACM12, MACM14, PACM14, MACM16, PACM16, MACM18, PACM18, MACMI/12, MACMI/MACMT/MACM12, MACMI/MACMT/MACM16 oder MACMI/MACMT/12 oder um eine Mischung zweier oder mehrerer dieser Systeme ist;
wobei die Summe aus (A1) und (A2) die Gesamtheit der Polyamidmischung (A) ergibt;
(B) 15 - 55 Gew.-% flache Glasfasern mit einem Abmessungsverhältnis von der Haupt-Querschnittsachse zur Neben-Querschnittsachse im Bereich von 2.5 bis 4.5;
(C) 0 - 1.0 Gew.-% Hilfsstoffe und/oder Additive.

11. Verwendung nach einem der vorhergehenden Ansprüche, **dadurch gekennzeichnet, dass** die Polyamidformmasse, wenn zu einem Formkörper verarbeitet, für die Lagerung oder Förderung von Trinkwasser bei erhöhter Temperatur, bevorzugt bei Temperaturen von wenigstens 60°C, weiter bevorzugt von wenigstens 80°C, insbesondere bei Temperaturen von 85°C±2°C oder darüber ausgelegt ist, wobei dabei insbesondere bevorzugt die gesamte Konzentration an gelöstem organischem Kohlenstoff bei der siebten Extraktion einen Wert von 12.5 mg C/m²d nicht überschreitet, wobei der Migrationstest zur Bestimmung der Konzenentration an gelöstem organischen Kohlenstoff gemäß DIN EN 12873-1:2004 und -2:2005 durchgeführt wurde.

12. Verwendung nach einem der vorhergehenden Ansprüche zur Herstellung eines Formkörpers ausgewählt aus der Gruppe bestehend aus Bauteilen zur Förderung und/oder Aufbewahrung von Trinkwasser, insbesondere bei erhöhten Temperaturen vorzugsweise im Bereich von oder oberhalb von 80°C, insbesondere Armaturen, Fittings, Gehäusen, Mischern, Hähnen, Filtergehäusen, Wasserzählern, Wasserzählerkomponenten (Lager, Propeller, Pilone), Ventilen, Ventilkomponenten (Gehäuse, Absperrkugel, Schieber, Zylinder), Verteilern, Kartuschen, Pumpen, Pumpenkomponenten (z.B. Schaufelräder, Impeller), Leitungen oder Behälter sowie Bestandteil oder Element davon.

13. Formkörper zur Förderung und/oder Aufbewahrung von Trinkwasser, insbesondere bei erhöhten Temperaturen, vorzugsweise im Bereich von wenigstens 80 °C, insbesondere Armatur, Fitting, Gehäuse, Mischer, Hahn, Filtergehäuse, Wasserzähler, Wasserzählerkomponente (Lager, Propeller, Pilone), Ventil, Ventilkomponente (Gehäuse, Absperrkugel, Schieber, Zylinder), Verteiler, Kartusche, Pumpe, Pumpenkomponente (z.B. Schaufelräder, Impeller), Leitung oder Behälter respektive Bestandteil oder Element davon, hergestellt aus einer Formmasse, enthaltend oder bestehend aus den folgenden Bestandteilen:
(A) 37 - 90 Gew.-% einer Polyamidmischung bestehend aus den Komponenten (A1) und (A2), wobei
(A1) 75 - 95 Gew.-% mindestens ein aliphatisches Polyamid enthaltend mindestens eine PA-Einheit V16 (V = acyclisches, aliphatisches Diamin mit 4 bis 12 Kohlenstoffatomen, 16 = 1,16-Hexadecandisäure); und
(A2) 5 - 25 Gew.-% mindestens ein transparentes Polyamid VX/WX/VY/WY/Z, wobei mindestens eine der Polyamideinheiten WX oder WY vorhanden ist und wobei die Abkürzungen V bis Z von den folgenden Molekülen abgeleitet sind: V: acyclisches aliphatisches Diamin mit 6 bis 12 Kohlenstoffatomen; W: cycloaliphatisches Diamin; X: acyclische aliphatische Dicarbonsäuren mit 9 bis 18 Kohlenstoffatomen; Y: aromatische Dicarbonsäuren Z: Lactame und Aminocarbonsäuren mit 6 bis 12 Kohlenstoffatomen;
wobei die Summe aus (A1) und (A2) 100 Gew.-% (A) ergibt;
(B) 10 - 60 Gew.-% Füll- oder Verstärkungsstoffe;
(C) 0 - 3 Gew.-% Hilfsstoffe und/oder Additive;
wobei die Summe der Komponenten (A) bis (C) 100 Gew.-% ausmacht.

14. Formkörper nach vorhergehendem Anspruch, **dadurch gekennzeichnet, dass** wenigstens ein Bereich, vorzugsweise in Form einer Beschichtung oder eines Abschnitts, dem Trinkwasser bei bestimmungsgemässem Gebrauch zumindest zeitweise oder permanent direkt mit Trinkwasser in Kontakt steht.

## Claims

1. Use of a molding compound comprising or consisting of the following components:
(A) 37 to 90 wt% of a polyamide mixture consisting of the components (A1) and (A2), wherein
(A1) 75 - 95 wt% at least one aliphatic polyamide comprising at least one PA unit V16 (V = acyclic aliphatic diamine having 4 to 12 carbon atoms, 16 = 1,16-hexadecaneidioic acid); and
(A2) 5 - 25 wt% at least one transparent polyamide VX/WX/VY/WY/Z, where at least one of the polyamide units WX or WY is present and where the abbreviations V to Z are derived from the following molecules: V: acyclic aliphatic diamine having 4 to 12 carbon atoms; W: cycloaliphatic diamine; X: acyclic aliphatic dicarboxylic acids having 9 to 18 carbon atoms; Y: aromatic dicarboxylic acids; Z: lactams and aminocarboxylic acids having 6 to 12 carbon atoms;
where the sum of (A1) and (A2) produces the totality of the polyamide mixture (A);
(B) 10 - 60 wt% fillers or reinforcements;
(C) 0 - 3 wt% auxiliary substances and/or additives;
where the sum of the components (A) to (C) adds up to 100 wt%,
for the manufacture of a molded body for drinking water, in particular of a container, a fitting, or a pipe, where at least regions of the processed molding compound are directly in contact with the drinking water at times or permanently during its intended use.

2. Use in accordance with claim 1, **characterized in that** component (A1) is
at least one aliphatic polyamide comprising at least 50, preferably at least 60 mol%, and in particular preferably at least 80 mol%, of a PA unit V16, where the acyclic aliphatic diamine V has 6 to 10 carbon atoms; or
an aliphatic polyamide selected from the group PA516, PA616, PA916, PA1016, PA616/1016, and PA516/616, or a mixture of these systems; or
PA616, PA616/1016, or PA1016; or
PA616.

3. Use in accordance with one of the preceding claims, **characterized in that** component (A2) is MACM12, PACM12, MACM14, PACM14, MACM16, PACM16, MACM18, PACM18, PACM12/MACM12, PACM16/MACM16, MACMI/12, MACMI/MACMT/MACM12, MACMI/MACMT/MACM16 or MACMI/MACMT/12, or a mixture of two or more of these systems.

4. Use in accordance with one of the preceding claims, **characterized in that**
the reinforcements of component (B) are selected from the group:
glass fibers, carbon fibers, aramid fibers, or mixtures of such fibers; or
the fillers of component (B) are selected from the group: talcum, mica, silicate, quartz, titanium dioxide, wollastonite, kaolin, amorphous silicas, magnesium carbonate, magnesium hydroxide, chalk, lime, feldspar, barium sulfate, solid or hollow glass spheres or ground glass.

5. Use in accordance with one of the preceding claims, **characterized in that** component (B) is completely formed from glass fibers, in particular round or flat glass fibers having a dimensional ratio of the main cross-sectional axis to the secondary cross-sectional axis in the range from 2.5 to 4.5, in particular from 3 to 4.

6. Use in accordance with one of the preceding claims, **characterized in that**
the at least one aliphatic polyamide (A1) has a solution viscosity determined at an 0.5 wt% solution of the polymer in m-cresol at 20°C in accordance with DIN EN ISO 307 in the range from ηᵣₑₗ = 1.5 to 3.0, preferably in the range from ηᵣₑₗ = 1.6 to 2.6, in particular in the range from 1.7 to 2.3; and/or
the at least one transparent polyamide (A2) has a solution viscosity (ηᵣₑₗ) determined using a 0.5 wt% solution of the polymer in m-cresol at 20°C in accordance with ISO 307 between 1.4 and 2.5, preferably between 1.5 to 2.0, in particular preferably between 1.55 to 1.90; and/or has a glass transition point T_{g} above 100°C, preferably above 120°C, in particular preferably above 130°C.

7. Use in accordance with one of the preceding claims, **characterized in that**
the at least one transparent polyamide (A2) is an amorphous polyamide having an enthalpy of fusion determined in accordance with ISO 11357 (2013) at pellets of less than 4 J/g; or
the at least one transparent polyamide (A2) is a microcrystalline polyamide having an enthalpy of fusion determined in accordance with ISO 11357 (2013) at pellets of 4 to 25 J/g.

8. Use in accordance with one of the preceding claims, **characterized in that**, in each case with respect to the sum of components (A) to C),
component (A) is present in the range from 44 - 85 wt%, preferably in the range from 49.5 - 75 wt%, or 49.5 - 74.9 wt%; and/or
component (B) is present in the range from 15 - 55 wt%, preferably from 25 - 50 wt%, in particular preferably in the form of glass fibers; and/or
component (C) is present in the range of at most 1.0 wt%, preferably at most 0.5 wt%, in particular in the range from 0.1 to 0.5 wt%.

9. Use in accordance with one of the preceding claims, **characterized in that**, in each case with respect to the totality of the polyamide mixture (A),
component (A1) is present in the range from 78 - 93 wt%, preferably in the range from 80 - 90 wt%; and/or
component (A2) is present in the range from 22 - 7 wt%, preferably in the range from 20 - 10 wt%.

10. Use in accordance with one of the preceding claims, **characterized in that** the molding compound comprises the following elements:
(A) 44 to 85 wt% of a polyamide mixture consisting of the components (A1) and (A2), wherein
(A1) is 78 - 93 wt% of aliphatic polyamide PA616 or PA1016 or a mixture thereof; and
(A2) is 7 - 22 wt% of transparent cycloaliphatic polyamide MACM12, PACM12, MACM14, PACM14, MACM16, PACM16, MACM18, PACM18, MACMI/12, PACM12/MACM12, PACM16/MACM16, MACMI/MACMT/MACM12, MACMI/MACMT/MACM16, or MACMI/MACMT/12, or a mixture of two or more of these systems,
where the sum of (A1) and (A2) produces the totality of the polyamide mixture (A);
(B) 15 - 55 wt% of flat glass fibers having a dimensional ratio of the main cross-sectional axis to the secondary cross-sectional axis in the range from 2.5 to 4.5;
(C) 0 - 1.0 wt% auxiliary substances and/or additives.

11. Use in accordance with one of the preceding claims, **characterized in that** the polyamide molding compound, when processed to form a molded body, is configured for the storage or conveying of drinking water at an elevated temperature, preferably at temperatures of at least 60°C, further preferably of at least 80°C, in particular at temperatures of 85°C ± 2°C or thereabove, with the total concentration of dissolved organic carbon on the seventh extraction in particular preferably not exceeding a value of 12.5 mg C/m²d, and with the migration test for carrying out the determination of the concentration of dissolved organic carbon being performed in accordance with DIN EN 12873-1:2004 and -2:2005.

12. Use in accordance with one of the preceding claims for manufacturing a molded body selected from the group comprising elements for conveying and/or storing drinking water, in particular at elevated temperatures preferably of at least 80°C, in particular armatures, fittings, housings, mixers, faucets, filter housings, water meters, water meter components (bearings, propellers, pylons), valves, valve components, (housings, shut-off spheres, sliders, cylinders), distributors, cartridges, pumps, pump components (e.g. blade wheels, impellers), pipes, or containers, and an element or a member thereof.

13. A molded body for conveying and/or storing drinking water, in particular at elevated temperatures preferably of at least 80°C, in particular an armature, fitting, housing, mixer, faucet, filter housing, water meter, water meter component (bearing, propeller, pylon), valve, valve component, (housing, shut-off sphere, slider, cylinder), distributor, cartridge, pump, pump component (e.g. blade wheels, impellers), pipe, or container, respectively an element or a member thereof, manufactured from a molding compound or comprising or consisting of the following elements:
(A) 37 to 90 wt% of a polyamide mixture consisting of the components (A1) and (A2), wherein
(A1) 75 - 95 wt% at least one aliphatic polyamide comprising at least one PA unit V16 (V = acyclic aliphatic diamine having 4 to 12 carbon atoms, 16 = 1,16-hexadecaneidioic acid); and
(A2) 5 - 25 wt% at least one transparent polyamide VX/WX/VY/WY/Z, where at least one of the polyamide units WX or WY is present and where the abbreviations V to Z are derived from the following molecules: V: acyclic aliphatic diamine having 6 to 12 carbon atoms; W: cycloaliphatic diamine; X: acyclic aliphatic dicarboxylic acids having 9 to 18 carbon atoms; Y: aromatic dicarboxylic acids; Z: lactams and aminocarboxylic acids having 6 to 12 carbon atoms;
where the sum of (A1) and (A2) produces 100 wt% (A);
(B) 10 - 60 wt% fillers or reinforcements;
(C) 0 - 3 wt% auxiliary substances and/or additives;
where the sum of the components (A) to (C) adds up to 100 wt%.

14. A molded body in accordance with the preceding claim, **characterized in that** at least one region, preferably in the form of a coating or of a section, is directly in contact with the drinking water at times or permanently during its intended use.

## Revendications

1. Utilisation d'un mélange à mouler contenant, ou en étant constitué, les constituants suivants :
(A) 37 à 90 % en poids d'un mélange de polyamides consistant en les composants (A1) et (A2), à savoir
(A1) 75 à 95 % en poids d'au moins un polyamide aliphatique contenant au moins un motif PA V16 (V = amine aliphatique acyclique ayant 4 à 12 atomes de carbone, 16 = acide 1,16-hexadécanedioïque) ; et
(A2) 5 à 25 % en poids d'un polyamide transparent VX/WX/VY/WY/Z, au moins l'un des motifs polyamide WX ou WY étant présent, et les abréviations V à Z dérivant des molécules suivantes : V : diamine aliphatique acyclique ayant 4 à 12 atomes de carbone ; W : diamine cycloaliphatique ; X : acides dicarboxyliques aliphatiques acycliques ayant 9 à 18 atomes de carbone ; Y : acides dicarboxyliques aromatiques ; Z : lactames et acides aminocarboxyliques ayant 6 à 12 atomes de carbone ;
la somme de (A1) et (A2) représentant la totalité du mélange de polyamides A ;
(B) 10 à 60 % en poids de charges ou de substances de renfort ;
(C) 0 à 3 % en poids d'adjuvants et/ou d'additifs ;
la somme des composants (A) à (C) étant de 100 % en poids,
pour la fabrication d'un objet moulé destiné à l'eau potable, en particulier d'un réservoir, d'un raccord ou d'une canalisation, dans lequel, dans le cas d'une utilisation conforme, au moins des zones du mélange à mouler mis en œuvre sont au moins par intervalles ou en permanence directement en contact avec de l'eau potable.

2. Utilisation selon la revendication 1, **caractérisée en ce que**, pour ce qui concerne le composant (A1), il s'agit
d'au moins un polyamide aliphatique contenant au moins 50, de préférence au moins 60 % en moles et d'une manière particulièrement préférée au moins 80 % en moles d'un motif PA V16, la diamine aliphatique acyclique V possédant 6 à 10 atomes de carbone ; ou
d'un polyamide aliphatique choisi dans le groupe PA516, PA616, PA916, PA1016, PA616/1016 et PA515/616 ou un mélange de ces systèmes ; ou
de PA616, PA616/1016 ou PA1016 ; ou
de PA616.

3. Utilisation selon l'une des revendications précédentes, **caractérisée en ce que**, pour ce qui concerne le composant (A2), il s'agit de MACM12, PACM12, MACM14, PACM14, MACM16, PACM16, MACM18, PACM18, MACMI/12, MACMI/MACMT/MACM12, MACMI/MACMT/MACM16 ou de MACMI/MACMT/12 ou d'un mélange de deux ou plus de ces systèmes.

4. Utilisation selon l'une des revendications précédentes, **caractérisée en ce que**
les substances de renfort du composant (B) sont choisies dans le groupe : fibres de verre, fibres de carbone, fibres aramides ou mélanges de ces fibres, ou
les charges du composant (B) sont choisies dans le groupe : talc, mica, silicate, quartz, dioxyde de titane, wollastonite, kaolin, silices amorphes, carbonate de magnésium, hydroxyde de magnésium, craie, chaux, feldspath, sulfate de baryum, billes de verre pleines ou creuses, ou verre en poudre.

5. Utilisation selon l'une des revendications précédentes, **caractérisée en ce que** le composant (B) est en totalité formé de fibres de verre, en particulier de fibres de verre rondes ou plates ayant un rapport d'aspect entre l'axe principal en coupe transversale et l'axe secondaire en coupe transversale compris dans la plage de 2,5 à 4,5, en particulier de 3 à 4.

6. Utilisation selon l'une des revendications précédentes, **caractérisée en ce que**
l'au moins un polyamide aliphatique (A1) présente une viscosité en solution, déterminée dans une solution à 0,5 % en poids du polymère dans du m-crésol à 20 °C selon DIN EN ISO 307, comprise dans la plage ηᵣₑₗ = 1,5 à 3,0, de préférence dans la plage ηᵣₑₖ = 1,6 à 2,6, en particulier dans la plage de 1,7 à 2,3, et/ou
l'au moins un polyamide transparent (A2) présente une viscosité en solution (ηᵣₑₗ), déterminée sur une solution à 0,5 % en poids du polymère dans le m-crésol à 20 °C selon DIN EN ISO 307, entre 1,4 et 2,5, de préférence entre 1,5 et 2,0, d'une manière particulièrement préférée entre 1,55 et 1,90, et/ou une température de transition vitreuse T_{g} supérieure à 100 °C, de préférence supérieure à 120 °C, d'une manière particulièrement préférée supérieure à 130 °C.

7. Utilisation selon l'une des revendications précédentes, **caractérisée en ce que**
l'au moins un polyamide transparent (A2) est un polyamide amorphe ayant une enthalpie de fusion, déterminée sur un granulé selon ISO 11357 (2013), inférieure à 4 J/g, ou
l'au moins un polyamide transparent (A2) est un polyamide microcristallin ayant une enthalpie de fusion, déterminée sur un granulé selon ISO 11357 (2013), dans la plage de 4 à 25 J/g.

8. Utilisation selon l'une des revendications précédentes, **caractérisée en ce que**, dans chaque cas par rapport à la somme des composants (A) à (C),
le composant (A) est présent en une quantité comprise dans la plage de 44 à 85 % en poids, de préférence dans la plage de 49,5 à 75 % en poids ou de 49,5 à 74,9 % en poids, et/ou
le composant (B) est présent en une quantité comprise dans la plage de 15 à 55 % en poids, de préférence de 25 à 50 % en poids, d'une manière particulièrement préférée sous forme de fibres de verre, et/ou
le composant (C) est présent en une quantité comprise dans la plage d'au plus 1,0 % en poids, de préférence d'au plus 0,5 % en poids, de préférence dans la plage de 0,1 à 0,5 % en poids.

9. Utilisation selon l'une des revendications précédentes, **caractérisée**, dans chaque cas par rapport à la totalité du mélange de polyamides (A),
le composant (A1) est présent en une quantité comprise dans la plage de 78 à 93 % en poids, de préférence dans la plage de 80 à 90 % en poids, et/ou
le composant (A2) est présent en une quantité comprise dans la plage de 22 à 7 % en poids, de préférence dans la plage de 20 à 10 % en poids.

10. Utilisation selon l'une des revendications précédentes, **caractérisée en ce que** le mélange à mouler consiste en les constituants suivants :
(A) 44 à 85 % en poids d'un mélange de polyamides consistant en les composants (A1) et (A2), à savoir
(A1) 78 à 93 % en poids du polyamide PA616 ou PA1016 ou d'un mélange de ceux-ci ; et
(A2) 7 à 22 % en poids d'un polyamide cycloaliphatique transparent MACM12, PACM12, MACM14, PACM14, MACM16, PACM16, MACM18, PACM18, MACMI/12, MACMI/MACMT/MACM12, MACMI/MACMT/MACM16 ou de MACMI/MACMT/12 ou d'un mélange de deux ou plus de ces systèmes ;
la somme de (A1) et (A2) correspondant à la totalité du mélange de polyamides (A) ;
(B) 15 à 55 % en poids de fibres de verre plates présentant un rapport d'aspect entre l'axe principal en coupe transversale et l'axe secondaire en coupe transversale compris dans la plage de 2,5 à 4,5 ;
(C) 0 à 1,0 % en poids d'adjuvants et/ou d'additifs.

11. Utilisation selon l'une des revendications précédentes, **caractérisée en ce que** le mélange à mouler de polyamides, quand il est mis en œuvre pour donner un objet moulé, est conçu pour le stockage ou le transport d'eau potable à haute température, de préférence à des températures d'au moins 60 °C, plus préférentiellement d'au moins 80 °C, en particulier à des températures de 85 °C±2 °C, auquel cas d'une manière particulièrement préférée la concentration totale du carbone organique dissous, lors de la septième extraction, ne dépasse pas une valeur de 12,5 mg C/m²d, l'essai de migration destiné à la détermination de la concentration du carbone organique dissous ayant été effectué selon DIN EN 12873-1:2004 et -2-2005.

12. Utilisation selon l'une des revendications précédentes pour la fabrication d'un objet moulé choisi dans le groupe consistant en les composants destinés au transport et/ou au stockage d'eau potable, en particulier à des températures élevées, de préférence dans la plage de 80 °C ou au-delà, en particulier la robinetterie, les raccords, les boîtiers, les mélangeurs, les robinets, les boîtiers de filtres, les compteurs d'eau, les composants de compteurs d'eau (paliers, ailettes, pylônes), les vannes, les composants de vannes (cages, billes d'arrêt, tiroirs, cylindres), les répartiteurs, les cartouches, les pompes, les composants de pompes (par exemple roues à aubes, turbines), les canalisations ou réservoirs, ainsi que les constituants ou éléments de ces derniers.

13. Objet moulé pour le transport et/ou le stockage d'eau potable en particulier à des températures élevées, de préférence dans la plage d'au moins 80 °C, en particulier un robinet, un raccord, un boîtier, un mélangeur, un robinet, un boîtier de filtres, un compteur d'eau, un composant de compteur d'eau (paliers, ailettes, pylônes), une soupape, un composant de soupape (cages, billes d'arrêt, tiroirs, cylindres), un répartiteur, une cartouche, une pompe, un composant de pompe (par exemple roues à aubes, turbines de pompe), une canalisation ou un réservoir, ou encore un constituant ou un élément de ce dernier, fabriqué à partir d'un mélange à mouler contenant, ou en étant constitué, les constituants suivants :
(A) 37 à 90 % en poids d'un mélange de polyamides consistant en les composants (A1) et (A2), à savoir
(A1) 75 à 95 % en poids d'au moins un polyamide aliphatique contenant au moins un motif PA V16 (V = amine aliphatique acyclique ayant 4 à 12 atomes de carbone, 16 = acide 1,16-hexadécanedioïque) ; et
(A2) 5 à 25 % en poids d'un polyamide transparent VX/WX/VY/WY/Z, au moins l'un des motifs polyamide WX ou WY étant présent, et les abréviations V à Z dérivant des molécules suivantes : V : diamine aliphatique acyclique ayant 6 à 12 atomes de carbone ; W : diamine cycloaliphatique ; X : acides dicarboxyliques aliphatiques acycliques ayant 9 à 18 atomes de carbone ; Y : acides dicarboxyliques aromatiques ; Z : lactames et acides aminocarboxyliques ayant 6 à 12 atomes de carbone ;
la somme de (A1) et (A2) représentant la totalité du mélange de polyamides A ;
(B) 10 à 60 % en poids de charges ou de substances de renfort ;
(C) 0 à 3 % en poids d'adjuvants et/ou d'additifs ;
la somme des composants (A) à (C) étant de 100 % en poids.

14. Objet moulé selon la revendication précédente, **caractérisé en ce qu'**au moins une zone, de préférence sous forme d'un revêtement ou d'un tronçon, est, pour une utilisation conforme, au moins en permanence ou par intervalles en contact direct avec l'eau potable.
